**Europäisches Patentamt**

**European Patent Office**

**Office européen des brevets**

(19)

(11) Veröffentlichungsnummer : **0 204 275**
**B1**

(12) **EUROPÄISCHE PATENTSCHRIFT**

(45) Veröffentlichungstag der Patentschrift :
22.02.89

(51) Int. Cl.⁴ : **B 62 M   9/08**, B 62 M   3/04

(21) Anmeldenummer : **86107381.5**

(22) Anmeldetag : **30.05.86**

(54) **Antriebsvorrichtung, insbesondere für Fahrräder.**

(30) Priorität : **31.05.85 DE 8516007 U**
**21.06.85 DE 8518006 U**

(43) Veröffentlichungstag der Anmeldung :
**10.12.86 Patentblatt 86/50**

(45) Bekanntmachung des Hinweises auf die Patenterteilung : **22.02.89 Patentblatt 89/08**

(84) Benannte Vertragsstaaten :
**AT BE CH DE FR GB IT LI LU NL SE**

(56) Entgegenhaltungen :
**WO-A-81 /016 20**
**DE-C-   139 418**
**DE-U- 8 518 068**
**FR-A-   773 524**
**FR-A- 2 501 146**
**FR-A- 2 526 392**

(73) Patentinhaber : **Niesel, Andreas**
**Elisabethstrasse 62**
**D-8044 Lohhof (DE)**

(72) Erfinder : **Niesel, Andreas**
**Elisabethstrasse 62**
**D-8044 Lohhof (DE)**

(74) Vertreter : **Urner, Peter, Dipl.-Phys. Ing. grad.**
**Steinsdorfstrasse 14**
**D-8000 München 22 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Antriebsvorrichtung gemäß dem Oberbegriff des Patentanspruchs 1, die sich insbesondere zum Einsatz bei Fahrrädern eignet.

Bei herkömmlichen Fahrrädern sind üblicherweise beide Tretkurbeln drehschlüssig mit dem Kettenzahnrad verbunden, dessen Mittelpunkt zugleich mit dem Mittelpunkt der beiden Tretkurbeln zusammenfällt. Das heißt, das Kettenzahnrad besitzt vom Drehmittelpunkt aus gerechnet gleiche Radien, so daß die Hebelverhältnisse beim Ketteneingriff stets dieselben sind. Dies führt dazu, daß die auf die Pedale auszuübenden Kräfte vom Ketteneingriff bis zum Kettenausgriff stets dieselben sind. Der Nachteil hierbei besteht darin, daß insbesondere im Bereich der oberen Totpunktlage es außerordentlich schwer ist, die entsprechende Tretkurbel nach unten zu treten, so daß also insgesamt gesehen die herkömmliche Antriebsvorrichtung noch nicht den ergonomisch optimalen Bedingungen angepaßt ist.

Aus der DE-C 139 418 ist bereits eine Antriebsvorrichtung für Fahrräder bekannt, bei der der Verlauf des Drehmomentes im ersten Viertel einer Kurbelumdrehung eingestellt werden kann. Diese Antriebsvorrichtung weist ein Kettenzahnrad auf, das um eine zur Kettenzahnradebene senkrechte erste Gerade drehbar ist, sowie zwei beidseitig des Kettenzahnrades angeordnete Tretkurbeln, die um eine zweite zur Kettenzahnradebene senkrechte Gerade drehbar sind, die gegenüber der ersten Geraden versetzt ist.

Die Tretkurbeln sind über Rollen innerhalb des Kettenzahnrades bzw. eines weiteren Bügels geführt, so daß insgesamt zwei Gleitbahnen vorhanden sind. Es treten daher relativ hohe mechanische Verluste auf. Durch Lagerung beider Tretkurbeln baut darüber hinaus die Antriebsvorrichtung entsprechend breit aus. Sie besitzt insgesamt einen aufwendigen Aufbau und ist daher teuer in der Herstellung.

Der Erfindung liegt die Aufgabe zugrunde, die zuletzt genannte Antriebsvorrichtung so weiterzubilden, daß sie einen höheren mechanischen Wirkungsgrad und einen weniger aufwendigen und kompakteren Aufbau aufweist.

Die Lösung der gestellten Aufgabe ist im kennzeichnenden Teil des Patentanspruchs 1 angegeben.

Vorteilhafte Ausgestaltungen der Erfindung sind den Unteransprüchen zu entnehmen.

Die sich insbesondere für Fahrräder eignende Antriebsvorrichtung mit einem Kettenzahnrad, das um eine zur Kettenzahnradebene senkrechte erste Gerade drehbar ist, und mit zwei beidseitig des Kettenzahnrades angeordneten Tretkurbeln, von denen die eine Tretkurbel um eine zweite zur Kettenzahnradebene senkrechte Gerade drehbar ist, die gegenüber der ersten Geraden versetzt ist, zeichnet sich dadurch aus, daß

— die andere Tretkurbel fest mit dem Kettenzahnrad verbunden ist,

— das Kettenzahnrad im Bezug zur ersten Geraden unterschiedliche Radien aufweist,

— die andere Tretkurbel relativ zum maximalen Radius des Kettenzahnrades in Vorwärtsrichtung um einen Winkel von 45° bis 135° geneigt ist,

— in Horizontalstellung der anderen Tretkurbel die zweite Gerade gegenüber der ersten Geraden auf einer in der Kettenzahnradebene verlaufenden Horizontalen versetzt ist, wobei sich die eine Tretkurbel ebenfalls wenigstens annähernd in Horizontalrichtung erstreckt,

— die eine Tretkurbel mit der anderen Tretkurbel über eine mit einem Kopplungshebel fest verbundene und durch das Kettenzahnrad hindurchragende Achse sowie eine Langloch- bzw. Gleitführung zur Aufnahme der Relativbewegung zwischen beiden Tretkurbeln gekoppelt ist, und

— ein Kettenspanner zum Spannen einer auf dem Kettenzahnrad liegenden Kette vorhanden ist.

Bei der Antriebsvorrichtung nach der Erfindung wird eine Drehzahlerhöhung bei gleicher Lastphase erreicht, wodurch sich eine Reduzierung der Tretkraft ergibt. Ferner wird erreicht, daß die meiste Kraft gerade immer dann aufgebracht werden muß, wenn sich die Pedale in einer ergonomisch günstigen Stellung befinden, so daß eine optimale Umsetzung der Leistung ermöglicht ist. Es ergibt sich bei gleicher Leistung und Arbeit weniger Kraftaufwand, da durch eine höhere Drehzahl die Intervallzeit verkürzt wird. Zugleich ergibt sich bei dem optimalen Tretbereich der einen Kurbel eine Beschleunigung der anderen Kurbel, was zu einer Entlastung des sich nach oben bewegenden Beines führt. Erreicht werden kann insbesondere, daß im unteren Totpunkt einer der Kurbeln die andere obere Kurbel schon ca. 10° nach vorne geneigt ist, wodurch die Krafteinleitung durch das jeweils oben stehende Bein begünstigt wird. Insgesamt steigt die Tretkraft vom oberen Totpunkt bis zur Horizontalstellung der Kurbel an und nimmt dann wieder ab, weshalb der Kraftverlauf ergonomisch dem Bewegungsverlauf des Beines gut angeglichen ist. Durch richtige Auswahl des Bolzenabstandes, der Länge des Kupplungshebels und des Versatzes der Tretkurbeln kann ein annähernd identisches Kraft/Geschwindigkeitsverhalten beider (nicht formschlüssig verbundener) Tretkurbeln erreicht werden.

Eine vorteilhafte Ausgestaltung der Erfindung zeichnet sich dadurch aus, daß die eine Tretkurbel frei gelagert ist, die Achse fest mit der anderen Tretkurbel verbunden ist, der Kupplungshebel auf der Seite der einen Tretkurbel liegt und die Langloch- bzw. Gleitführung, in die ein Bolzen ragt, sich im Bereich der einen Tretkurbel und des Kupplungshebels befindet.

Eine weitere vorteilhafte Ausgestaltung der Antriebsvorrichtung besteht darin, daß die eine Tretkurbel frei gelagert ist, die Achse fest mit der anderen Tretkurbel verbunden ist, der Kupplungshebel auf der Seite der einen Tretkurbel liegt, der über einen Bolzen die eine Tretkurbel mitnimmt, und daß das frei gelagerte Ende der einen Tretkurbel als Gabel ausgebildet ist, die eine koaxial zur zweiten Geraden gelagerte Buchse bzw. einen Bolzen gleitend umläuft.

Eine noch andere vorteilhafte Ausgestaltung der Erfindung ist dadurch gekennzeichnet, daß die eine Tretkurbel fest mit der Achse verbunden ist, der Kupplungshebel auf der Seite der anderen Tretkurbel liegt und die Langloch- bzw. Gleitführung, in die ein Bolzen ragt, sich im Bereich der anderen Tretkurbel und des Kupplungshebels befindet.

Vorteilhafterweise befinden sich die Langloch- bzw. Gleitführung im Kupplungshebel, während der Bolzen mit der einen oder anderen Tretkurbel fest verbunden ist. Die Anordnung kann aber auch umgekehrt werden.

Die zweite Gerade (D), um die sich die eine Tretkurbel dreht, kann in Vorwärtsfahrtrichtung gesehen vor der ersten Geraden (T) liegen, um die sich das Kettenzahnrad und die andere Tretkurbel drehen. Es können aber auch umgekehrte Verhältnisse vorliegen. Das exzentrisch zur ersten Geraden T angeordnete Kettenzahnrad kann beispielsweise kreisförmig ausgebildet sein. Es kann aber auch aus Segmenten mit unterschiedlich großen Radien gebildet sein.

Beispielsweise kann das Kettenzahnrad zwei einander gegenüberliegende Segmente bzw. Viertelkreissegmente mit großem Radius und zwei gegenüberliegende Segmente bzw. Viertelkreissegmente mit kleinerem Radius aufweisen.

Das Kettenzahnrad kann vorteilhafterweise aber auch ein Viertelkreissegment mit großem Radius, ein diesem gegenüberliegendes Viertelkreissegment mit kleinem Radius und zwei zwischen diesen liegende und sich tangential anschließende Ellipsensegmente aufweisen.

Es kann auch ein um die erste Gerade T drehbares zweites Kettenzahnrad vorhanden sein, das analog zum ersten Kettenzahnrad verkleinert ausgebildet ist und gegenüber diesem eine andere Zähnezahl aufweist. Der Fahrer kann dann wahlweise zwischen dem ersten oder dem zweiten Kettenzahnrad je nach Belastung wählen (Kettenschaltung). Beide Kettenzahnräder sind dann fest miteinander verbunden.

Das Kettenzahnrad hat, bezogen auf die oberste Kurbelstellung der mit dem Kettenzahnrad fest verbundenen anderen Tretkurbel und der Tretkurbelachse (erste Achse T) die größeren Radien im Bereich des zum Hinterrad weisenden Segmentes. Der Mittelpunkt der achsversetzten einen Tretkurbel, die frei gelagert ist, ist bezogen auf die Tretkurbelachse (erste Achse T) nach hinten in Richtung des Hinterrades versetzt angeordnet. Er kann aber auch nach vorn verlagert sein, wie bereits erwähnt. Vorzugsweise liegt auf der Linie des maximalen Radius über den Drehpunkt (T) hinaus der minimale Radius des Kettenzahnrades.

Die frei gelagerte eine Tretkurbel kann an ihrem einen frei gelagerten Ende einen wälzgelagerten Ring aufweisen oder aber in Art einer Gabel und damit mit einer gabelförmigen Gleitbahn gebildet sein, welche auf der Außenseite einer Lagerbuchse gleitet, die koaxial zur zweiten Achse D angeordnet ist.

Die Zeichnung stellt Ausführungsbeispiele der Erfindung dar. Es zeigen :

Fig. 1 eine Seitenansicht der Antriebsvorrichtung mit Blick auf die andere Tretkurbel gemäß einem ersten Ausführungsbeispiel,

Fig. 2 eine Draufsicht auf die gegenüberliegende Seite mit Blick auf die eine Tretkurbel, die frei gelagert ist,

Fig. 3 eine Seitenansicht der Antriebsvorrichtung mit Blick auf die frei gelagerte eine Tretkurbel gemäß einem zweiten Ausführungsbeispiel,

Fig. 4 eine Seitenansicht der Antriebsvorrichtung mit Blick auf die andere und mit dem Kettenzahnrad fest verbundene Tretkurbel gemäß einem dritten Ausführungsbeispiel,

Fig. 5 eine Seitenansicht auf die Antriebsvorrichtung gemäß einem vierten Ausführungsbeispiel, bei dem das Kettenzahnrad durch Segmente gebildet ist,

Fig. 6 eine Seitenansicht der Antriebsvorricht mit Blick auf die andere Tretkurbel gemäß einem fünften Ausführungsbeispiel,

Fig. 7 eine Seitenansicht der Antriebsvorrichtung mit Blick auf die eine Tretkurbel gemäß Fig. 1, wobei das Kettenzahnrad in Segmente unterteilt ist, entsprechend einem sechsten Ausführungsbeispiel, und

Fig. 8 eine entsprechende Ansicht wie in Fig. 7, jedoch auf ein Kettenzahnrad, das gemäß einem siebten Ausführungsbeispiel durch kreisförmige und elliptische Segmente gebildet ist.

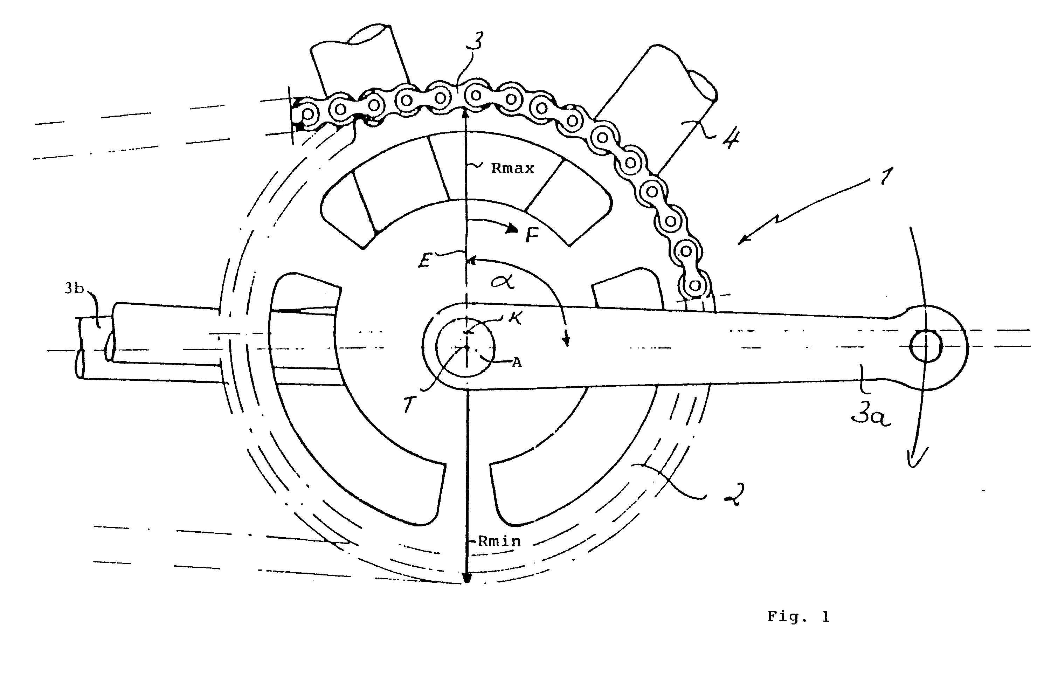

Die allgemein in Fig. 1 mit 1 bezeichnete Fahrradantriebsvorrichtung umfaßt ein Kettenzahnrad 2 zum Abwälzen einer Fahrradkette 3 sowie auf jeder Seite des Kettenzahnrades 2 eine Tretkurbel 3a bzw. 3b, wobei an den freien Enden der Tretkurbeln 3a,3b in üblicher Weise nicht dargestellte Pedale befestigt sind. Der Einfachheit halber ist die Lagerung der Fahrradantriebsvorrichtung innerhalb des mit 4 bezeichneten Fahrradrahmens nicht im einzelnen erläutert. Die Tretkurbel 3b ist dabei die eine Tretkurbel, während die Tretkurbel 3a die andere Tretkurbel ist.

Nach Fig. 1 ist das mit K bezeichnete Zentrum des Kettenzahnrades 2, von dem der äußere Kettenzahnradumfang den gleichen Radienabstand aufweist, exzentrisch gegenüber der mit T bezeichneten ersten Geraden versetzt, koaxial zu der eine Tretkurbelachse A angeordnet ist. Das Kettenzahnrad 2 ist mit der Tretkurbel 3a drehschlüssig bzw. fest verbunden, so daß mit Drehung der Tretkurbel 3a sich in gleicher Weise auch das Kettenzahnrad 2 dreht, und zwar um den gemeinsamen Drehpunkt bzw. die erste Gerade T, die die Zentrallinie der Tretkurbelachse A ist. Dies führt dazu, daß im Bereich des Ketteneingriffs das Kettenzahnrad 2 mit variablem Radius und damit variabler Hebellänge in Eingriff gelangt, so daß sich die Hebelverhältnisse während des Umlaufs des Kettenzahnrades 2 ändern.

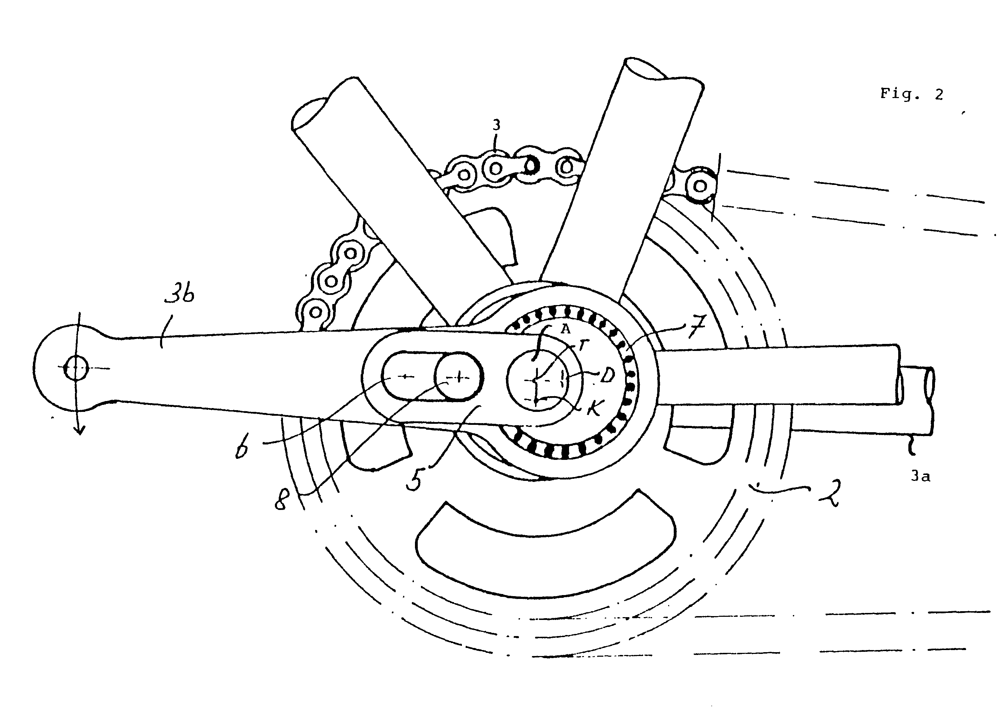

Auf der anderen Seite des in Figur 1 dargestellten Kettenzahnrades 2 ist gemäß Fig. 2 ein Kupplungshebel 5, der an seinem freien Ende eine Langlochführung 8 entlang eines Langlochs bzw. einer Nut aufweist, fest bzw. drehschlüssig mit der Drehkurbelachse A verbunden, so daß mit Treten der Tretkurbel 3a auch der Kupplungshebel 5 sich um die Drehkurbelachse A dreht. Die Tretkurbel 3b hingegen ist um die zweite Gerade D frei drehbar gelagert, was im Ausführungsbeispiel nach Fig. 2 durch ein Kugellager 7 verdeutlicht ist, das koaxial zur zweiten Geraden D liegt. Die Tretkurbelachse A tritt dabei durch das Kugellager 7 hindurch. Die zweite Gerade D der Tretkurbel 3b ist dabei entgegengesetzt zu deren radialen Erstreckung gegenüber der Tretkurbelachse A bzw. der ersten Geraden T versetzt, wie aus Fig. 2 recht deutlich hervorgeht. In Fahrtrichtung nach links in Fig. 2 gesehen liegt also die zweite Gerade D vor der ersten Geraden T, so daß D näher am Hinterrad liegt als T. Beim dargestellten ersten Ausführungsbeispiel ergibt sich somit, daß die Ebene E (vgl. Fig. 1), in der die Geraden T und K liegen, im wesentlichen senkrecht zu derjenigen Ebene verläuft, in der die Geraden T und D liegen. Sämtliche Geraden K, T und D liegen parallel zueinander, wobei K diejenige Gerade ist, die durch das geometrische Zentrum des in diesem Fall kreisförmigen Kettenzahnrades 2 und senkrecht zur Kettenzahnradebene hindurchtritt.

Die Kupplung der einen Tretkurbel 3b mit dem Kettenzahnrad 2 erfolgt indirekt über einen an der Tretkurbel 3b befestigten Bolzen 8, der in die Langlochführung 6 des Kupplungshebels 5 eingreift. Selbstverständlich kann auch umgekehrt der Bolzen 8 mit dem Kupplungshebel 5 fest verbunden sein und in ein Langloch innerhalb der einen Tretkurbel 3b eingreifen.

Die Relativstellung von einerseits der anderen Tretkurbel 3a auf der einen Seite des Kettenzahnrades 2 und andererseits der einen Tretkurbel 3b und des Kupplungshebels 5 auf der anderen Seite des Kettenzahnrades 2 ist so, daß sich in der in Fig. 1 dargestellten horizontalen Erstreckung der anderen Tretkurbel 3a die eine Tretkurbel 3b und der Kupplungshebel 5 einerseits und die andere Tretkurbel 3a andererseits diametral gegenüberliegend von der Tretkurbelachse A bzw. der ersten Geraden T radial nach außen erstrecken.

Es ist aber auch möglich, die exakt diametral gegenüberliegende Stellung von Tretkurbel 3a einerseits und Tretkurbel 3b sowie Kupplungshebel 5 andererseits in Winkelrichtung um die Tretkurbelachse A zu verlagern.

Wesentlich ist, daß die Tretkurbel 3a relativ zu der Ebene E, in der gemäß Fig. 1 die Geraden T und K liegen, um bevorzugt 90° in die mit dem Pfeil F angegebene Normaldrehrichtung für Vorwärtslauf des Fahrrades versetzt angeordnet ist. Vorteilhafte Verhältnisse ergeben sich aber auch, wenn die Tretkurbel 3a in einem Winkelbereich von $\alpha = 45°$ bis $\alpha = 135°$ angeordnet ist.

Der beschriebene Aufbau hat zur Folge, daß die aufgrund der exzentrischen Verlagerung des Kettenzahnrades 2 zur Tretkurbelachse A bzw. ersten Geraden T maximalen Radien bzw. der maximale Radius jeweils sich im oberen Bereich des Kettenzahnrades 2 im Ketteneingriff befinden, wenn die Tretkurbel 3a sich in der optimalen Tretstellung, also insbesondere außerhalb der Totpunktlagen, befindet. Die Übereinstimmung zwischen der für die Tretverhältnisse optimalen Stellung der Tretkurbel 3a in Relation zum gewünscht hohen Hebel infolge Eingriff des Kettenzahnrades 2 mit der Kette 3 über den Radius Rmax kann über den Winkel $\alpha$, also die Ausrichtung der Tretkurbel 3a zur Ebene E bestimmt werden.

Andererseits tritt in der optimalen Tretstellung der Tretkurbel 3a eine entsprechende Entlastung für die das Fahrrad benutzende Person ein, weil in diesem Bereich die Tretkurbel 3b aufgrund des Hebelverhältnisses schneller nach oben dreht.

Ferner ergeben sich dann, wenn sich die Tretkurbel 3b in optimaler Tretstellung befindet, wiederum die vorteilhaften Kräfteverhältnisse, wobei zwar das Kettenzahnrad 2 mit kleinstem Radius in Ketteneingriff kommt, jedoch infolge der Hebelübersetzungen nahezu identische Kräfteverhältnisse herrschen. Darüber hinaus steht im unteren Totpunkt der einen Tretkurbel die andere Tretkurbel bereits im oberen Totpunkt um ca. 10° vor bei einer Anordnung der Tretkurbeln entsprechend den Fig. 1 und 2, wobei dies aufgrund der Kupplung der Tretkurbel 3b über den Bolzen 8 mit dem mit der Tretkurbelachse A festen Kupplungshebel 5 und durch den Versatz der Geraden T, D gegeneinander bedingt ist.

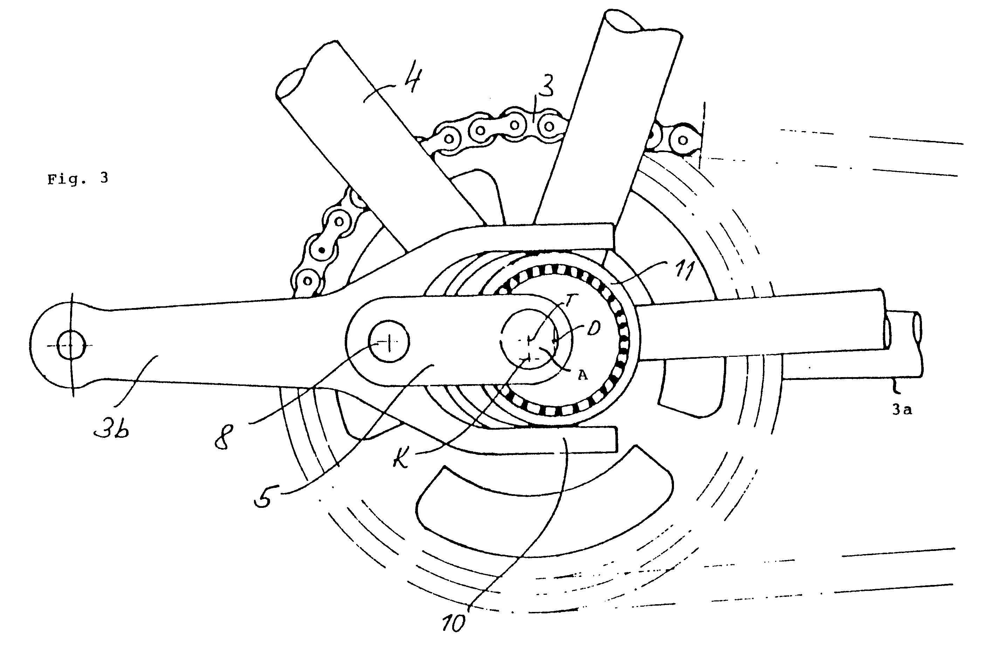

Bei der Ausführungsform nach Fig. 3 ist die eine Tretkurbel 3b an ihrem einen Ende in Art einer Gabel 10 ausgebildet, welche eine frei drehbar gelagerte Buchse 11 beidseitig umgreift, die koaxial zur zweiten Geraden D angeordnet ist. Dadurch ist die eine Tretkurbel 3b wiederum frei drehbar bezüglich der Tretkurbelachse A bzw. der ersten Geraden T gelagert, wobei die Langlochführung nunmehr in den Gabelbereich 10 fällt. Die Kupplung zwischen der einen Tretkurbel 3b und dem Kupplungselement 5 erfolgt wiederum mittels des Bolzens 8, der bei Drehung der Tretkurbelachse A bzw. des Kupplungshebels 5 die eine Tretkurbel 3b mitnimmt. Im übrigen unterscheidet sich jedoch das zweite Ausführungsbeispiel nach Fig. 3 nicht von dem ersten Ausführungsbeispiel nach den Figuren 1 und 2.

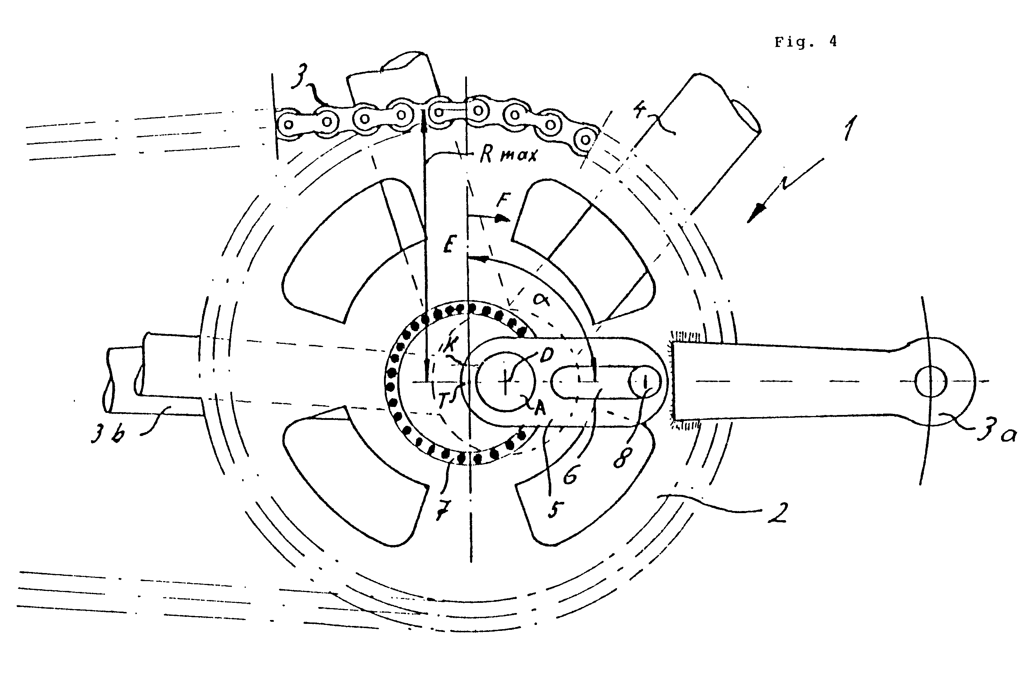

Bei dem dritten Ausführungsbeispiel nach Fig. 4 ist die eine Tretkurbel 3b fest bzw. drehschlüssig mit dem Kupplungshebel 5 verbunden, und zwar über die Tretkurbelachse A. Dieser Kupplungshebel 5 auf der Seite der mit dem Kettenzahnrad 2 fest verbundenen anderen Tretkurbel 3a weist an seinem freien Ende eine Langlochführung 8 in Art eines Langlochs oder einer Nut auf, in die ein Bolzen 8 eingreift, der mit dem Kettenzahnrad 2 fest verbunden ist.

Mit Treten der anderen Tretkurbel 3a dreht sich auch der Kupplungshebel 5 und somit auch die Tretkurbel 3b, jedoch in einem anderen Winkelverhältnis um die Tretkurbelachse A bzw. zweite Gerade D, die die Zentrumslinie der Tretkurbelachse A ist. Beim dritten Ausführungsbeispiel gemäß Fig. 4 ist die zweite Gerade D, um die sich die Tretkurbel 3b dreht, gegenüber der ersten Geraden T, um die sich das mit der Tretkurbel 3a fest verbundene Kettenzahnrad 2 dreht, in Richtumg zum Vorderrad versetzt. Die zweite Gerade D kann gegenüber der ersten Geraden T aber auch in Richtung zum Hinterrad versetzt sein. Es ergibt sich somit, daß die Ebene E, in der die Geraden T und K liegen, bei horizontaler und nach vorn weisender Kurbelstellung der Tretkurbel 3b senkrecht oder aber im wesentlichen senkrecht zu derjenigen Ebene liegt, in der die Geraden T und D liegen.

Die Kupplung der einen Tretkurbel 3b mit dem Kettenzahnrad 2 erfolgt indirekt über den Kupplungshebel 5 mit Langlochführung 6 und den am Kettenzahnrad 2 befestigten Bolzen 8, der in die Langlochführung 6 eingreift.

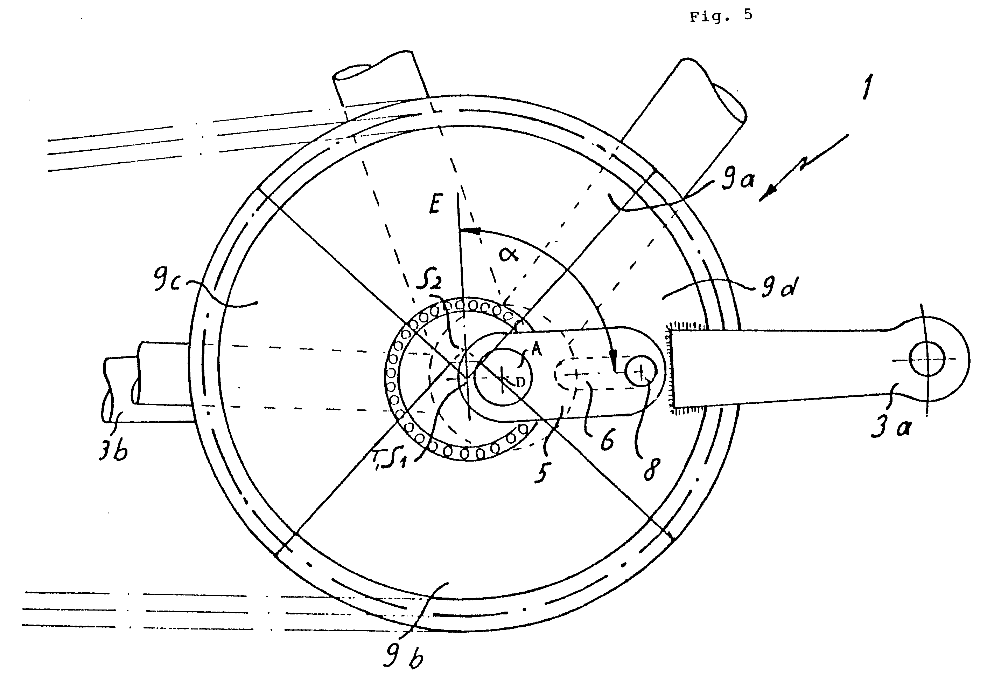

Bei dem vierten Ausführungsbeispiel nach Fig. 5 ist umgekehrt die Langlochführung 6 im Kettenzahnrad 2 ausgeführt, während der Bolzen 8 mit dem Kupplungshebel 5 fest verbunden ist. Im übrigen sind die Hebelverhältnisse die gleichen wie beim dritten Ausführungsbeispiel nach Fig. 4.

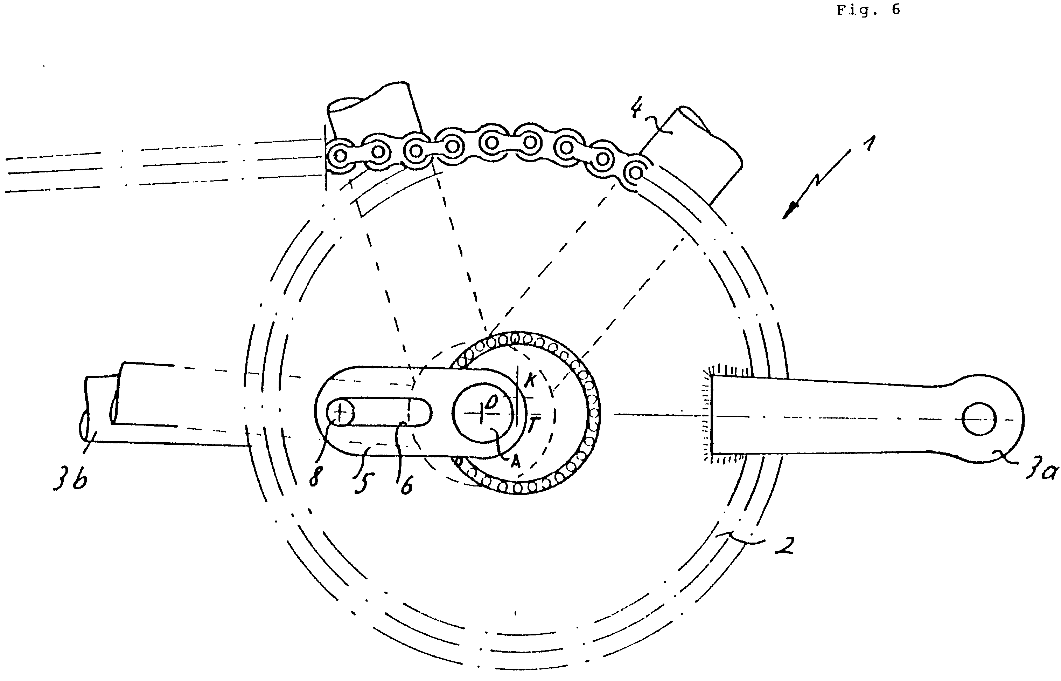

Beim fünften Ausführungsbeispiel nach Fig. 6 ist gegenüber dem dritten Ausführungsbeispiel nach Fig. 4 die Lagerung des Kettenzahnrades 2 bzw. die erste Gerade T in Fahrtrichtung nach vorn relativ zur zweiten Geraden versetzt, wobei der Kupplungshebel 5 um 180° verdreht und drehschlüssig auf der Drehachse A der gegenüberliegenden Tretkurbel 3b angeordnet ist. Der Bolzen 8 ist in diesem Fall wieder mit dem Kettenzahnrad 2 fest verbunden und greift in die Langlochöffnung 6 im Kupplungshebel 5 ein.

Auch im vorliegenden Fall liegen sich bei Horizontalstellung der Tretkurbel 3a diese Tretkurbel 3a und die Tretkurbel 3b sowie der Kupplungshebel diametral gegenüber. Die Elemente 3a, 3b und 5 erstrecken sich also zur selben Zeit in horizontaler Richtung.

Im übrigen gilt das bereits zu den Figuren 1 bis 3 Gesagte.

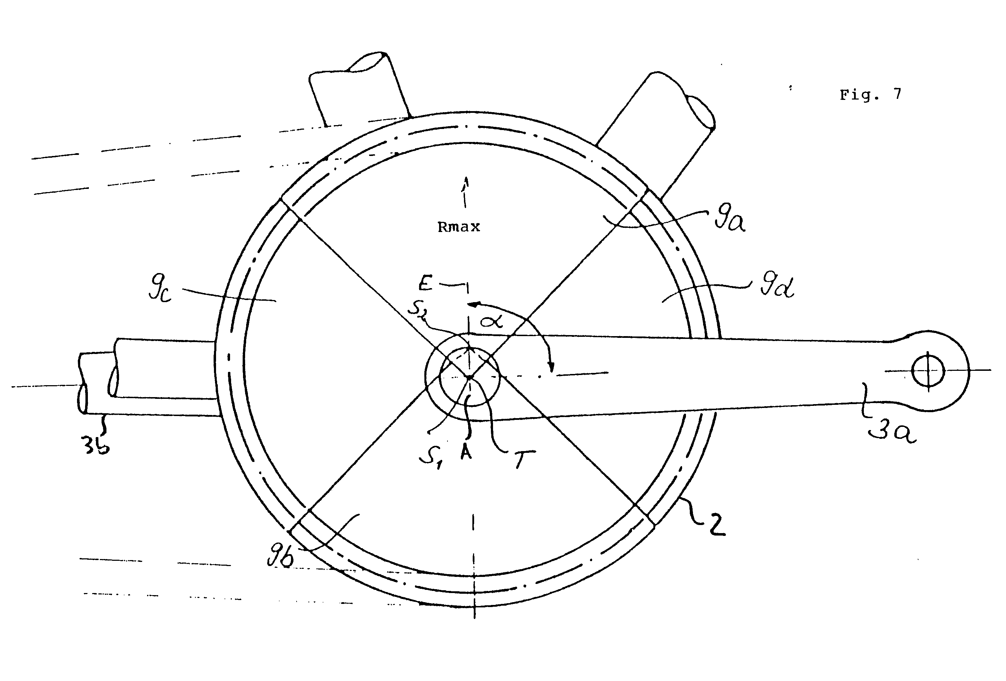

Das sechste Ausführungsbeispiel nach Fig. 7 unterscheidet sich von dem ersten Ausführungsbeispiel nach den Figuren 1 und 2 dadurch, daß das Kettenzahnrad 2 aus Segmenten 9a,9b,9c,9d mit unterschiedlichen Radien zusammengesetzt ist. Nach Fig. 7 weisen die Segmente 9a und 9b, die diametral gegenüberliegend angeordnet sind, von ihren jeweiligen Spitzpunkten $S_2$ bzw. $S_1$ gleiche Radien zu ihrem Außenumfang auf, jedoch ist der Spitzpunkt $S_1$ des Segments 9a mit der ersten Geraden T bzw. dem Zentrum der Tretkurbelachse A zusammenfallend angeordnet, wohingegen der Spitzpunkt $S_2$ des Segments 9b exzentrisch zur ersten Geraden T nach oben versetzt ist, so daß bezogen auf die Tretkurbelachse A bzw. die erste Gerade T das Segment 9a größere, hingegen das Segment 9a geringere Radien aufweist. Die beiden anderen Segmente 9c und 9d sind zwischengefügt und bedingen den Übergang von den Radienverhältnissen des Segments 9a zu denen des Segments 9b und umgekehrt.

Im dargestellten sechsten Ausführungsbeispiel nach Figur 7 betragen die Segmentwinkel 90°. Sie können jedoch auch davon abweichen, wobei der maximale Segmentwinkel etwa 135° beträgt. Die Anordnung der Kurbel 3a relativ zum Segment 9a entspricht im wesentlichen den Verhältnissen nach Fig. 1, wobei die Ebene E nunmehr durch die beiden Spitzpunkte $S_1$ und $S_2$ aufgespannt ist. Von dort bemißt sich auch der Winkel α zur Tretkurbel 3a.

Auch bei den genannten Ausführungsbeispielen entsprechend den Figuren 4 bis 6 kann das Kettenzahnrad in mehrere Segmente 9a, 9b, 9c und 9d unterteilt sein, wie beispielsweise die Figur 5 zeigt.

Wie bereits im Zusammenhang mit den ersten beiden Ausführungsbeispielen erwähnt, steht auch im unteren Totpunkt der einen Tretkurbel die andere Tretkurbel bereits im oberen Totpunkt im Bereich um 10° vor und umgekehrt, und zwar bei einer Anordnung der Tretkurbeln entsprechend den Figuren 4 und 5, wobei dies aufgrund der Kopplung der Tretkurbel 3b über den Bolzen 8 mit dem mit der Achse A festen Kopplungshebel 5 und durch den Achsversatz T-D bedingt ist. In diesem Fall liegt die Tretkurbelachse A konzentrisch zur zweiten Geraden D.

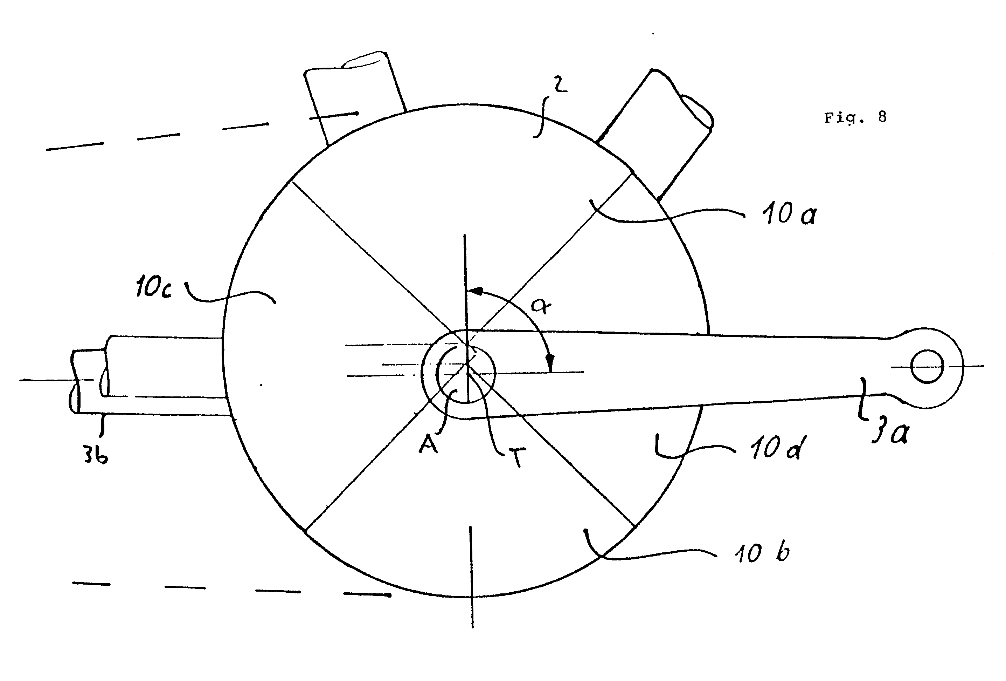

Auch beim siebten Ausführungsbeispiel nach Figur 8 ist das Kettenzahnrad 2 in mehrere bzw. vier Segmente unterteilt. Das bei horizontal liegender Tretkurbelachse 3a oben liegende Segment weist einen relativ zum gegenüberliegenden Segment 10b größeren Kreisradius auf, während die zwischen ihnen liegenden Segmente 10c und 10d elliptische Abschnitte sind. Diese elliptischen Segmente 10c, 10d schließen sich tangential an den Umfangsverlauf der kreisförmigen Segmente 10a,10b an. Beide Spitzpunkte der kreisförmigen Segmente 10a,10b liegen z. B. oberhalb der ersten Geraden T, wenn sich die Tretkurbel 3a in der Horizontalstellung befindet.

Zur Verminderung der Reibung zwischen Bolzen 8 und Langlochführung 6 kann auf dem Bolzen 8 ein Wälz- oder Nadellager angeordnet sein.

## Patentansprüche

1. Antriebsvorrichtung, insbesondere für Fahrräder, mit
— einem Kettenzahnrad (2), das um eine zur Kettenzahnradebene senkrechte erste Gerade (T) drehbar ist, und mit
— zwei beidseitig des Kettenzahnrades (2) angeordneten Tretkurbeln (3a, 3b), von denen die eine Tretkurbel (3b) um eine zweite zur Kettenzahnradebene senkrechte Gerade (D) drehbar ist, die gegenüber der ersten Geraden (T) versetzt ist, dadurch gekennzeichnet, daß
— die andere Tretkurbel (3a) fest mit dem Kettenzahnrad (2) verbunden ist,
— das Kettenzahnrad (2) in Bezug zur ersten Geraden (T) unterschiedliche Radien aufweist,
— die andere Tretkurbel (3a) relativ zum maximalen Radius (Rmax) des Kettenzahnrades (2) in Vorwärtstretrichtung um einen Winkel (α) von 45° bis 135° geneigt ist,

— in Horizontalstellung der anderen Tretkurbel (3a) die zweite Gerade (D) gegenüber der ersten Geraden (T) auf einer in der Kettenzahnradebene verlaufenden Horizontalen versetzt ist, wobei sich die eine Tretkurbel (3b) ebenfalls wenigstens annähernd in Horizontalrichtung erstreckt,

— die eine Tretkurbel (3b) mit der anderen Tretkurbel (3a) über eine mit einem Kupplungshebel (5) fest verbundene und durch das Kettenzahnrad (2) hindurchtretende Achse (A) sowie eine Langloch- bzw. Gleitführung (6, 10) zur Aufnahme der Relativbewegung zwischen beiden Tretkurbeln (3a, 3b) gekoppelt ist, und daß

— ein Kettenspanner zum Spannen einer auf dem Kettenzahnrad (2) liegenden Kette (3) vorhanden ist.

2. Antriebsvorrichtung nach Anspruch 1, dadurch gekennzeichnet, daß die eine Tretkurbel (3b) frei gelagert ist, die Achse (A) fest mit deranderen Tretkurbel (3a) verbunden ist, der Kupplungshebel (5) auf der Seite der einen Tretkurbel (3b) liegt und die Langloch- bzw. Gleitführung (6), in die ein Bolzen (8) ragt, sich im Bereich der einen Tretkurbel (3b) und des Kupplungshebels (5) befindet (Fig. 2).

3. Antriebsvorrichtung nach Anspruch 1, dadurch gekennzeichnet, daß die eine Tretkurbel (3b) frei gelagert ist, die Achse (A) fest mit der anderen Tretkurbel (3a) verbunden ist, der Kupplungshebel (5) auf der Seite der einen Tretkurbel (3b) liegt, der über einen Bolzen (8) die eine Tretkurbel (3b) mitnimmt, und daß das frei gelagerte Ende der einen Tretkurbel (3b) als Gabel (10) ausgebildet ist, die eine koaxial zur zweiten Geraden (D) gelagerte Buchse (11) bzw. einen Bolzen gleitend umläuft (Fig. 3).

4. Antriebsvorrichtung nach Anspruch 1, dadurch gekennzeichnet, daß die eine Tretkurbel (3b) fest mit der Achse (A) verbunden ist, der Kupplungshebel (5) auf der Seite der anderen Tretkurbel (3a) liegt und die Langloch- bzw. Gleitführung (6), in die ein Bolzen (8) ragt, sich im Bereich der anderen Tretkurbel (3a) und des Kupplungshebels (5) befindet (Fig. 4).

5. Antriebsvorrichtung nach Anspruch 2 oder 4, dadurch gekennzeichnet, daß sich die Langloch- bzw. Gleitführung (6) im Kupplungshebel (5) befindet und der Bolzen (8) mit der einen oder anderen Tretkurbel (3b, 3a) fest verbunden ist, oder umgekehrt (Fig. 2, 4 bzw. 5).

6. Antriebsvorrichtung nach einem der Ansprüche 1 bis 5, dadurch gekennzeichnet, daß die zweite Gerade (D) in Vorwärtsfahrtrichtung gesehen vor oder hinter der ersten Geraden (T) liegt (Fig. 2).

7. Antriebsvorrichtung nach Anspruch 1 oder einem der folgenden, dadurch gekennzeichnet, daß das Kettenzahnrad (2) exzentrisch zur ersten Geraden (T) angeordnet ist.

8. Antriebsvorrichtung nach Anspruch 7, dadurch gekennzeichnet, daß das Kettenzahnrad (2) kreisförmig ausgebildet ist.

9. Antriebsvorrichtung nach einem der Ansprüche 1 bis 7, dadurch gekennzeichnet, daß das Kettenzahnrad (2) aus Segmenten (9a-9d ; 10a-10d) mit unterschiedlich großen Radien gebildet ist.

10. Antriebsvorrichtung nach Anspruch 9, dadurch gekennzeichnet, daß das Kettenzahnrad (2) zwei einander gegenüberliegende Viertelkreissegmente (9a, 9b) mit großem Radius und zwei gegenüberliegende Viertelkreissegmente (9c, 9d) mit kleinerem Radius aufweist (Fig. 7).

11. Antriebsvorrichtung nach Anspruch 9, dadurch gekennzeichnet, daß das Kettenzahnrad (2) ein Viertelkreissegment (10a) mit großem Radius, ein diesem gegenüberliegendes Viertelkreissegment (10b) mit kleinerem Radius und zwei zwischen diesen liegende und sich tangential anschließende Ellipsensegmente (10c, 10d) aufweist (Fig 8).

12. Antriebsvorrichtung nach einem der Ansprüche 9 bis 11, dadurch gekennzeichnet, daß der Winkel (α) zwischen dem maximalen Radius (Rmax) und der mit dem Kettenzahnrad (2) fest verbundenen anderen Tretkurbel (3a) sich von der Winkelhalbierenden des oder der Segmente (10a ; 9a, 9b) mit dem großen Radius ab erstreckt.

13. Antriebsvorrichtung nach einem der Ansprüche 1 bis 12, dadurch gekennzeichnet, daß der Winkel (α) zwischen dem maximalen Radius (Rmax) und der mit dem Kettenzahnrad (2) fest verbundenen anderen Tretkurbel (3a) 90° beträgt.

14. Antriebsvorrichtung nach einem der Ansprüche 1 bis 13, dadurch gekennzeichnet, daß zusätzlich ein um die erste Gerade (T) drehbares zweites Kettenzahnrad vorhanden ist, das analog zum ersten Kettenzahnrad, jedoch verkleinert, ausgebildet ist und gegenüber diesem eine andere Zähnezahl aufweist.

15. Antriebsvorrichtung nach Anspruch 1 oder einem der folgenden, dadurch gekennzeichnet, daß beim Kettenzahnrad auf der Linie des maximalen Radius über dem Drehpunkt (T) hinaus der minimale Radius des Kettenzahnrades (2) liegt.

16. Antriebsvorrichtung nach Anspruch 2 oder einem der folgenden, dadurch gekennzeichnet, daß auf dem im Langloch (6) gleitenden Bolzen (8) ein reibungsminderndes Lager (z. B. Wälz- oder Nadellager) angeordnet ist.

## Claims

1. Drive device, in particular for bicycles, with
- a chain wheel (2), which is rotatable around a first straight line (T) perpendicular to the chain wheel plane, and with
- two tread cranks (3a, 3b) disposed on the two sides of the chain wheel (2), of which tread cranks (3a, 3b) the one tread crank (3b) can be rotated around a second straight line (D) disposed perpendicular to the chain wheel plane, which straight line (D) is staggered versus the first straight line (T), characterized in that
- the other tread crank (3a) is solidly connected with the chain wheel (2),
- the chain wheel (2) exhibits different radii relative to the first straight line (T),

- the other tread crank (3a) is inclined relative to the maximum radius (Rmax) of the chain wheel (2) in forward direction by an angle (alpha) of 45 to 135 degrees,

- the second straight line (D) is staggered versus the first straight line (T) on a horizontal running in the chain wheel plane in horizontal position of the other tread crank (3a), where the one tread crank (3b) extends also at least approximately in horizontal direction,

- the one tread crank (3b) is coupled with the other tread crank (3a) via an axle (A) solidly connected with a coupling lever (5) and passing through the chain wheel (2) as well as an oblong hole or, respectively, sliding guide (6) for receiving the relative motion between the two tread cranks (3a, 3b), and that

- chain tensioning means is present for tensioning a chain (3) disposed on the chain wheel (2).

2. Drive device according to claim 1 characterized in that the one tread crank (3b) is freely supported, the axle (A) is solidly connected with the tread crank (3a), the coupling lever (5) is disposed on the side of the one tread crank (3b) and the oblong hole or, respectively, sliding guide (6), into which a bolt (8) protrudes, is disposed in the region of the one tread crank (3b) and of the coupling lever (5) (Fig. 2).

3. Drive device according to claim 1 characterized in that the one tread crank (3b) is freely supported, the axle (A) is solidly connected to the other tread crank (3a), the coupling lever (5) is disposed on the side of the one tread crank (3b), which coupling lever (5) takes along the one tread crank (3b) via a bolt (8) and that the freely supported end of the one tread crank (3b) is formed as a fork (10), which slidingly runs around bushing (11) or, respectively, a bolt supported coaxially relative to the second straight line (Fig. 3).

4. Drive device according to claim 1 characterized in that the one tread crank (3b) is solidly connected to the axle (A), the coupling lever (5) is disposed on the side of the other tread crank (3a) and the oblong hole or, respectively, sliding guide (6) is disposed in the region of the other tread crank (3a) and of the coupling lever (5), where a bolt (8) protrudes into the oblong hole or, respectively, sliding guide (6) (Fig. 4).

5. Drive device according to Claim 2 or 4 characterized in that the oblong hole or, respectively sliding guide (6) is disposed in the coupling lever (5) and the bolt (8) is solidly connected with the one or the other tread crank (3b, 3a) or vice versa (Figs. 2, 4 or, respectively, 5).

6. Drive device according to one of the claims 1 to 5 characterized in that the second straight line (D) is disposed before or behind of the first straight line (T) as seen in a forward driving direction (Fig. 2).

7. Drive device according to claim 1 or one of the following, characterized in that the chain wheel (2) is disposed eccentrically relative to the first straight line (T).

8. Drive device according to claim 7 characterized in that the chain wheel (2) is formed as a circle.

9. Drive device according to one of the claims 1 to 7 characterized in that the chain wheel (2) is formed of segments (9a-9d ; 10a-10d) with differently large radii.

10. Drive device according to claim 9 characterized in that the chain wheel (2) is provided with two quarter circle segments (9a, 9b) disposed oppositely to each other with a large radius and two oppositely disposed quarter circle segments (9c, 9d) with a smaller radius (Fig. 7).

11. Drive device according to claim 9 characterized in that the chain wheel (2) is provided with a quarter circle segment (10a) with large radius, a quarter circle segment (10b) disposed oppositely to the quarter circle segment (10a) and having a smaller radius and elliptical segments (10c, 10d) disposed between the quarter circle segment (10a) with large radius and the quarter circle segment (10b) with smaller radius and following tangentially (Fig. 8).

12. Drive device according to one of the claims 9 to 11 characterized in that the angle (alpha) between the maximum radius (Rmax) and the other tread crank (3a) solidly connected to the chain wheel (2) extends from the line forming the middle of the angle of the segment or segments (10a ; 9a, 9b) with large radius.

13. Drive device according to one of claims 1 to 12 characterized in that the angle (alpha) between the maximum radius (Rmax) and the other tread crank (3a) solidly connected to the chain wheel (2) amounts to 90 degrees.

14. Drive device according to one of claims 1 to 13 characterized in that in addition a second chain wheel is present rotatable around the first straight line (T), where the second chain wheel is formed analogously to the first chain wheel, however diminuted, and where the second chain wheel exhibits a different tooth number as compared to the first chain wheel.

15. Drive device according to claim 1 or one of the following, characterized in that in the case of the chain wheel the minimum radius of the chain wheel (2) is disposed on the line of the maximum radius beyond the rotation center point (T).

16. Drive device according to claim 2 or one of the following, characterized in that a friction decreasing bearing (for example roller or needle bearing support) is disposed on the bolt (8) sliding in the oblong hole (6).

**Revendications**

1. Dispositif d'entraînement, en particulier pour bicyclettes, avec

- une roue d'entraînement à chaîne (2), qui peut tourner autour d'une première droite (T) perpendiculaire au plan de la roue d'entraînement à chaîne, et avec

- deux manivelles de pédalier (3a, 3b) disposées des deux côtés de la roue d'entraînement à chaîne (2), desquelles la manivelle de pédalier (3b) peut tourner autour d'une deuxième droite (D), qui est décalée par rapport à la première droite (T), et qui est perpendiculaire au plan de la roue d'entraînement à chaîne, caractérisé en ce que

- l'autre manivelle de pédalier (3a) est solidaire de la roue d'entraînement à chaîne (2),

- la roue d'entraînement à chaîne (2) présente différents rayons par rapport à la première droite (T),

- l'autre manivelle de pédalier (3a) est inclinée d'un angle ($\alpha$) de 45° à 135° par rapport au rayon maximum (Rmax) de la roue d'entraînement à chaîne (2) dans la direction de pédalage avant,

- dans la position horizontale de l'autre manivelle de pédalier (3a), la deuxième droite (D) est décalée par rapport à la première droite (T) sur une horizontale située dans le plan de la roue d'entraînement à chaîne, la manivelle de pédalier (3b) s'étendant elle-même au moins approximativement en direction horizontale,

- la manivelle de pédalier (3b) est accouplée à l'autre manivelle de pédalier (3a) par l'intermédiaire d'un axe (A) solidaire d'un levier d'accouplement (5) et traversant la roue d'entraînement à chaîne (2) ainsi que d'un guidage à trou oblong ou à glissement (6, 10) pour absorber le mouvement relatif entre les deux manivelles de pédalier (3a, 3b), et en ce que

- un tendeur de chaîne est prévu pour tendre une chaîne (3) située sur la roue d'entraînement à chaîne (2).

2. Dispositif d'entraînement selon la revendication 1, caractérisé en ce que la manivelle de pédalier (3b) est logée librement, l'axe (A) est solidaire de l'autre manivelle de pédalier (3a), le levier d'accouplement (5) est situé sur le côté de la manivelle de pédalier (3b) et le guidage à trou oblong ou à glissement (6), dans lequel un boulon (8) fait saillie, se trouve dans le domaine de la manivelle de pédalier (3b) et du levier d'accouplement (5) (figure 2).

3. Dispositif d'entraînement selon la revendication 1, caractérisé en ce que la manivelle de pédalier (3b) est logée librement, l'axe (A) est solidaire de l'autre manivelle du pédalier (3a), le levier d'accouplement (5), qui entraîne par l'intermédiaire d'un boulon (8) la manivelle de pédalier (3b), est situé sur le côté de la manivelle de pédalier (3b), et en ce que l'extrémité logée librement de la manivelle de pédalier (3b) est sous forme d'une fourche (10) qui circule à glissement autour d'une douille (11) logée de façon coaxiale à la deuxième droite (D) ou autour d'un boulon (figure 3).

4. Dispositif d'entraînement selon la revendication 1, caractérisé en ce que la manivelle de pédalier (3b) est solidaire de l'axe (A), le levier d'accouplement (5) est situé sur le côté de l'autre manivelle de pédalier (3a) et le guidage à trou oblong ou à glissement (6), dans lequel un boulon (8) fait saillie, se trouve dans le domaine de l'autre manivelle de pédalier (3a) et du levier d'accouplement (5) (figure 4).

5. Dispositif d'entraînement selon la revendication 2 ou la revendication 4, caractérisé en ce que le guidage à trou oblong ou à glissement (6) se trouve dans le levier d'accouplement (5), et le boulon (8) est solidaire de l'une ou l'autre manivelle de pédalier (3b, 3a), ou inversement (figure 2, 4 ou 5).

6. Dispositif d'entraînement selon l'une des revendications 1 à 5, caractérisé en ce que la deuxième droite (D) vue dans la direction de marche avant se trouve devant ou derrière la première droite (T) (figure 2).

7. Dispositif d'entraînement selon la revendication 1 ou l'une des suivantes, caractérisé en ce que la roue d'entraînement à chaîne (2) est disposée de façon excentrée par rapport à la première droite (T).

8. Dispositif d'entraînement selon la revendication 7, caractérisé en ce que la roue d'entraînement à chaîne (2) est circulaire.

9. Dispositif d'entraînement selon l'une des revendications 1 à 7, caractérisé en ce que la roue d'entraînement à chaîne (2) est formée de segments (9a-9d ; 10a-10d) de rayons de tailles différentes.

10. Dispositif d'entraînement selon la revendication 9, caractérisé en ce que la roue d'entraînement à chaîne (2) présente deux segments en quart de cercle (9a, 9b) opposés de grand rayon et deux segments en quart de cercle (9c, 9d) opposés de rayon plus petit (figure 7).

11. Dispositif d'entraînement selon la revendication 9, caractérisé en ce que la roue d'entraînement à chaîne (2) présente un segment en quart de cercle (10a) de grand rayon, un segment en quart de cercle (10b) opposé au précédent, de rayon plus petit et deux segments en ellipse (10c, 10d) disposés entre les précédents et se raccordant tangentiellement (figure 8).

12. Dispositif d'entraînement selon l'une des revendications 9 à 11, caractérisé en ce que l'angle ($\alpha$) entre le rayon maximum (Rmax) et l'autre manivelle de pédalier (3a) solidaire de la roue d'entraînement à chaîne (2) s'étend depuis la bissectrice du ou des segments (10a ; 9a, 9b) de grand rayon.

13. Dispositif d'entraînement selon l'une des revendications 1 à 12, caractérisé en ce que l'angle ($\alpha$) entre le rayon maximum (Rmax) et l'autre manivelle de pédalier (3a) solidaire de la roue d'entraînement à chaîne (2) vaut 90°.

14. Dispositif d'entraînement selon l'une des revendications 1 à 13, caractérisé en ce qu'il existe en outre une deuxième roue d'entraînement à chaîne pouvant tourner autour de la première droite (T), qui est constituée de façon analogue à la première roue d'entraînement à chaîne mais qui est plus petite et qui présente un nombre de dents différent par rapport à celle-ci.

15. Dispositif d'entraînement selon la revendication 1 ou l'une des suivantes, caractérisé en ce que, sur la roue d'entraînement à chaîne, le rayon minimum de la roue d'entraînement à chaîne (2) se trouve sur la ligne du rayon maximal au-dessus du point de rotation (T).

16. Dispositif d'entraînement selon la revendication 2 ou l'une des suivantes, caractérisé en ce qu'un palier diminuant le frottement (par exemple palier à roulement ou à aiguilles) est disposé sur le boulon (8) glissant dans le trou oblong (6).

Fig. 1

Fig. 2

EP 0 204 275 B1

Fig. 3

EP 0 204 275 B1

Fig. 4

Fig. 5

EP 0 204 275 B1

Fig. 6

Fig. 7

Fig. 8